# EUROPÄISCHE PATENTSCHRIFT

(11) **EP 3 396 479 B1**
(45) Veröffentlichungstag und Bekanntmachung des Hinweises auf die Patenterteilung: **18.03.2020**
(21) Anmeldenummer: 17168781.7
(22) Anmeldetag: 28.04.2017
(51) Int. Cl.: G05B 19/042

(54) **ENGINEERING-SYSTEM**
ENGINEERING SYSTEM
SYSTÈME D'INGÉNIERIE

(43) Veröffentlichungstag der Anmeldung: 31.10.2018
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 3 001 310

## Beschreibung

Die Erfindung betrifft ein Engineering-System zum Projektieren einer Automatisierungseinrichtung, wobei das Engineering-System dazu ausgebildet ist, erste Objekte für mindestens ein Automatisierungsgerät und zweite Objekte für mindestens ein Operator-System gemäß einer technologischen Hierarchie strukturiert zu hinterlegen und anzuzeigen sowie aus den ersten Objekten erste Runtime-Daten zum Laden in das Automatisierungsgerät und aus den zweiten Objekten zweite Runtime-Daten zum Laden in das Operator-System zu erzeugen, wobei Bestandteile der ersten Runtime-Daten mit Bestandteilen der zweiten Runtime-Daten in Wirkverbindung stehen.

Aus der Druckschrift EP 3 001 310 A1 ist ein Verfahren zur Aktualisierung von Firmware für Komponenten einer industriellen Automatisierungsanordnung bekannt.

Aus dem Siemens-Katalog ST PCS 7, Ausgabe 2016, Kapitel 4 , XP002770927, ist ein Engineering-System für ein Prozessleitsystem bekannt, welches zur Steuerung einer technischen Anlage vorgesehen ist. Ein derartiges Engineering-System ist zum "Engineeren" einer Automatisierungseinrichtung geeignet und ist beispielsweise dazu ausgebildet bzw. eingerichtet, Hard- und/oder Softwarekomponenten, Kommunikationsnetzwerke, Automatisierungsfunktionalitäten für kontinuierliche und sequenzielle Prozessabläufe (AS-Engineering) sowie Bedien- und Beobachtungsfunktionalitäten (OS-Engineering) zu projektieren und/oder zu konfigurieren.
Eine wesentliche Eigenschaft eines Leitsystems zur Prozesssteuerung bzw. zum Steuern verfahrenstechnischer Anlagen ist die so genannte "Delta-Ladefähigkeit" während der Prozesssteuerung, wodurch ermöglicht wird, dass trotz einer Änderung bzw. Modifikation der Projektierungsdaten das Leitsystem nicht angehalten werden muss. Architekturen derartiger Leitsysteme sind in der Regel heterogen und komplex, wobei jede Ebene (Feldebene, Steuerungsebene, ...) des Leitsystems ihre eigenen Technologien und Konfigurationen aufweist, die bei einer Delta-Aktualisierung geladen werden müssen. Beispielsweise für den Fall, dass ein neues Prozessobjekt in Form eines Reglerbausteins angelegt wird, so muss z. B. im Rahmen einer Delta-Aktualisierung bzw. eines Delta-Ladens das Steuerprogramm des Automatisierungsgerätes mit einem CFC-Reglerbaustein, das Prozessabbild des Operator-Systems mit der Datenstruktur des Reglerbausteins, die Anlagenbilder der Visualisierung mit den Symbolen des Reglerbausteins, weitere Operator-Systeme mit Adressierungsinformationen des Reglerbausteins geladen werden. Dabei kann es vorkommen, dass während dieser Delta-Aktualisierung beispielsweise das Prozessabbild des Operator-Systems mit der Datenstruktur des Reglerbausteins noch nicht geladen ist. Dies bewirkt, dass das Bildsymbol des Reglerbausteins in einem auf dem Operator-System darstellbaren Anlagenbild zwar angezeigt wird, dieses Bildsymbol jedoch nicht "dynamisiert" ist, d. h. es werden nicht die aktuellen Parameter des Reglers und nicht die aktuellen Soll- und Istwerte des Reglers angezeigt, was auf einen Projektierungsfehler hinweist obwohl ein derartiger Projektierungsfehler nicht vorliegt. Diese Fehlinterpretation bzw. dieser "Seiteneffekt" oder Auswirkung beim Delta-Laden ist beispielweise im Rahmen einer Inbetriebnahme störend.

Der Erfindung liegt daher die Aufgabe zugrunde ein Engineering-System der eingangs genannten Art zu schaffen, welches einem Anwender ermöglicht, zwischen einem Projektierungsfehler und den Auswirkungen eines Delta-Ladens von Runtime-Daten zu unterscheiden.

Diese Aufgabe wird durch die im kennzeichnenden Teil des Anspruchs 1 angegebenen Maßnahmen gelöst.

Vorteilhaft ist, dass insbesondere im Rahmen einer Inbetriebnahme neuer Automatisierungsfunktionalitäten zur Laufzeit ein Projekteur die Änderungen im Hinblick auf das Delta-Laden feingranular auf einzelne Geräte beschränken kann. Werden im Zuge einer schrittweisen Inbetriebnahme nicht alle zu ladenden Runtime-Objekte selektiert, so kann sich der Projekteur noch im Engineering die zu erwartenden Seiteneffekte anzeigen lassen um zur Laufzeit zwischen einem Seiteneffekt und einem Projektierungsfehler unterscheiden zu können. Darüber hinaus kann er selektiv Änderungen hinzunehmen, bis ungewünschte Seiteneffekte nicht mehr auftreten. Die Inbetriebnahme neuer Automatisierungsfunktionalitäten lässt sich effektiver und fehlerminimierter durchführen, wobei der Projekteur das Laden zunächst auf die Anlagenbilder beschränken kann, um dadurch Schritt für Schritt laden, testen und gegebenenfalls auch "zurückrollen" zu können.

Weitere vorteilhafte Ausgestaltungen der Erfindung ergeben sich aus den Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figur 1: eine auf einer Anzeige dargestellte Equipment Hierarchie,
- Figur 2: eine Übersichtsdarstellung mit Objekten und Runtime-Daten und
- Figuren 3 und 4: Vorschaubilder eines Tanks und eines CFC-Plans.

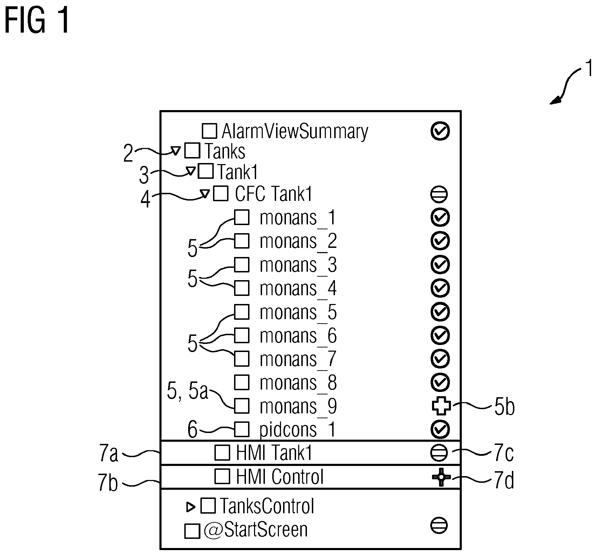

Die in den Figuren 1 bis 4 dargestellten gleichen Teile sind mit gleichen Bezugszeichen versehen.

Prozessobjekte einer zu steuernden technischen Anlage, z. B. Prozessobjekte in Form von Messstellen, Tanks, Ventile, Sensoren, Aktuatoren, Continuous Function Charts (CFCs) sowie Sequential Function Charts (SFCs) für Automatisierungsgeräte bzw. speicherprogrammierbare Steuerungen (Programmable Logic Controller), ..., sind in einer technologischen Hierarchie, beispielsweise in einer so genannten Equipment Hierarchie (EQH) strukturiert, wobei ein Anwender im Rahmen der Projektierung einer Automatisierungseinrichtung diese Equipment Hierarchie mittels einer geeigneten Software eines Engineering-Systems erstellt. Anschließend wird die derart erstellte Equipment Hierarchie mittels des Engineering-Systems kompiliert und die erzeugten Runtime-Objekte in die Automatisierungsgeräte und in Operator-Server von Operator-Systemen der Automatisierungseinrichtung geladen, wobei zur Laufzeit der Operator-Systeme bzw. des Prozessleitsystems die Equipment Hierarchie als zentrale Anlaufstelle z. B. für einen Batchprozess oder zur Navigation bzw. zur Ermittlung eines Prozessobjektes innerhalb der Equipment Hierarchie genutzt wird.

Im vorliegenden Ausführungsbeispiel ist in Figur 1 mit 1 eine Equipment Hierarchie bezeichnet, die mit einer Vielzahl von Ordnern und Unterordnern versehen ist. Beispielsweise weist ein Ordner 2 (Tanks) einen Unterordner 3 (Tank1) auf, dessen dort hinterlegter Inhalt - CFC-Plan 4, Monitor- und Regler-Bausteine 5, 6 des CFC-Plans 4, Anlagenbilder 7a, 7b - auf einer Anzeigeeinheit eines Engineering-Systems eingeblendet wird, wobei der CFC-Plan 4 und dessen Bausteine 5 Objekte mindestens eines Automatisierungsgerätes und die Anlagenbilder 7 Objekte mindestens eines Operator-Systems darstellen bzw. repräsentieren.

Um im Engineering-System ein selektives Delta-Laden anzustoßen, wählt ein Anwender zunächst in der Equipment Hierarchie 1 die zu ladenden Objekte (neue und/oder modifizierte Objekte) aus. Im vorliegenden Beispiel wird angenommen, dass der CFC-Plan 4 der Equipment Hierarchie 1 um einen Monitorbaustein 5a ("monans_9") und ein bestehendes bzw. bereits projektiertes Anlagenbild 7a ("HMITank1") um ein Baustein- bzw. Bildsymbol des Monitorbausteins ergänzt und ein neu projektiertes Anlagenbild 7b ("HMIControl") angelegt wurden, wobei für ein anstehendes Delta-Laden der Anwender bzw. Projekteur die Anlagenbilder 7a, 7b ("HMITank1", "HMIControl") auswählt. Auf der Anzeigeeinheit des Engineering-Systems werden der neue Monitorbaustein 5a ("monans_9") durch eine Kennzeichnung 5b und die Auswahl der Anlagenbilder 7a, 7b ("HMITank1", "HMIControl") durch Kennzeichnungen 7c, 7d angezeigt.

Aufgrund der ausgewählten Anlagenbilder "HMITank1", "HMIControl" in der Equipment Hierarchie 1, erzeugt das Engineering eine tabellarische Detailansicht, wobei ein Dienst des Engineering-Systems die Abhängigkeiten und Zusammenhänge von aus den Objekten erzeugten Runtime-Daten ermittelt. Dies bedeutet, dass dieser Dienst die Bestandteile der Runtime-Daten des mindestens einen Automatisierungsgerätes und die Bestandteile der Runtime-Daten des mindestens einen Operator-Systems ermittelt, die miteinander in Wirkverbindung stehen, wobei diese Abhängigkeiten und Zusammenhänge bzw. Wirkverbindungen auf der Anzeigeeinheit des Engineering-Systems dargestellt werden. Darüber hinaus ermittelt dieser Dienst so genannte "sekundäre" Runtime-Daten, die aufgrund des um den Monitorbaustein "monans_9" ergänzten CFC-Plans 4 erzeugt werden, wobei zu diesen sekundären Runtime-Daten in der Equipment Hierarchie 1 keine Objekte sichtbar sind.

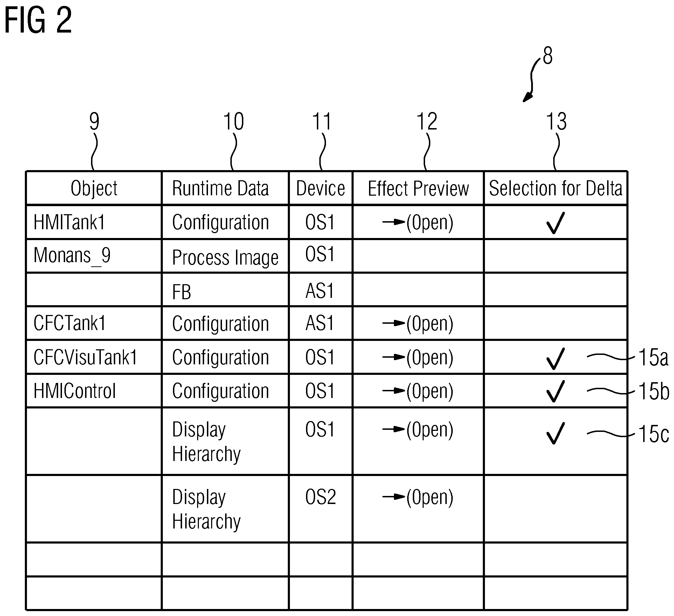

In Figur 2 sind die Abhängigkeiten und Zusammenhänge in einer tabellarischen Detailansicht 8 dargestellt. In einer Spalte 9 sind die Objekte aufgelistet, die in der Equipment Hierarchie 1 enthalten sind und aufgrund der Änderung bezüglich der Ergänzung des CFC-Plans 4 um den Monitorbaustein "monans_9" für ein selektives Delta-Laden in Frage kommen, wobei in einer Spalte 10 die zu diesen Objekten zugehörigen Runtime-Daten und ferner die aufgrund der Änderung bzw. Ergänzung betroffenen sekundären Runtime-Daten (Konfigurationen) angezeigt werden. In dieser Spalte 10 (Runtime-Daten) werden alle notwendigen Konfigurationen (über die Objektebene hinaus) für die jeweiligen Objekte aufgelistet. Beispielsweise wird für das neue Anlagenbild "HMIControl" neben der eigentlichen Konfiguration des Anlagenbildes auch eine Aktualisierung einer "Display-Hierarchie" auf Operator-Systemen (im Beispiel Operator-Systeme "OS1", "OS2") für eine entsprechende Adressierung des Anlagenbildes benötigt. In einer Spalte 11 (Device) werden die Geräte (Automatisierungsgerät "AS1", Operator-Systeme "OS1", "OS2") aufgelistet, die für den Fall einer entsprechenden Selektion von einem selektiven Delta-Laden der Runtime-Daten betroffen sind. In einer Spalte 12 kann eine objektbezogene Vorschau (Effekt-Vorschau) geöffnet werden, die ausgehend von einer aktuellen Delta-Selektion die jeweiligen "Seiteneffekte" visualisiert. In einer Spalte 13 kann der Anwender bzw. Projekteur die Selektion (angedeutet durch Haken 15a, 15b, 15c) für das nächste Delta-Laden bestimmen. Durch eine derartige dedizierte Selektion kann der Projekteur nun die Auswirkungen eines Delta-Ladens für die Inbetriebnahme, beispielsweise auf das Operator-System "OS1" beschränken und hierbei die jeweilig zu erwartenden Effekte vorab evaluieren. Somit können negative Auswirkungen auf andere Geräte bei der Inbetriebnahme vermieden werden.

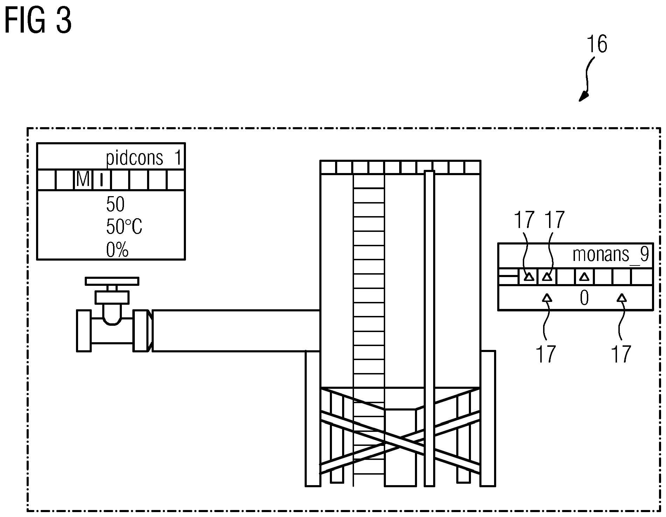

Im Folgenden wird auf Figur 3 verwiesen, in welchem ein durch das Engineering-System erzeugtes modifiziertes Vorschaudokument 16 (Effekt-Vorschau) für das mit "HMITank1" bezeichnete Anlagenbild 7a dargestellt ist, wobei angezeigt wird, wie sich eine Delta-Selektion bei einer Inbetriebnahme zur Laufzeit auswirkt und mit welchen "Seiteneffekten" zu rechnen sind. Das Vorschaudokument 16 ist statisch und zeigt gemäß der aktuellen Konfiguration der Objekte und der Delta-Selektion qualitativ die zu erwarteten Effekte.

Durch die Selektion des Anwenders -angedeutet durch die Häkchen 15a, 15b, 15c - wird das mit 7a bezeichnete und modifizierte Anlagenbild ("HMITank1") auf das Operator-System "OS1" geladen, allerdings kann das neue Bildsymbol für den Monitor-baustein 5a ("monans_9") nicht dynamisiert werden, weil der Anwender für das Delta-Laden sowohl ein Prozessabbild ("Process Image") auf dem Operator-System ("OS1") als auch ein Funktionsbaustein "*FB*" des Automatisierungsgerätes ("AS1") für den Monitorbaustein 5a ("monans_9") nicht vorgesehen hat bzw. nicht in Spalte 13 selektiert hat). Im vorliegenden Beispiel wird die fehlende Dynamisierung dem Anwender durch Warndreiecke 17 eingeblendet. Dem Anwender ist somit klar, wie sich die Selektion zur Laufzeit auswirkt, sodass es bei der Inbetriebnahme zu keinen Verwechslungen mit Projektierungsfehlern kommen kann.

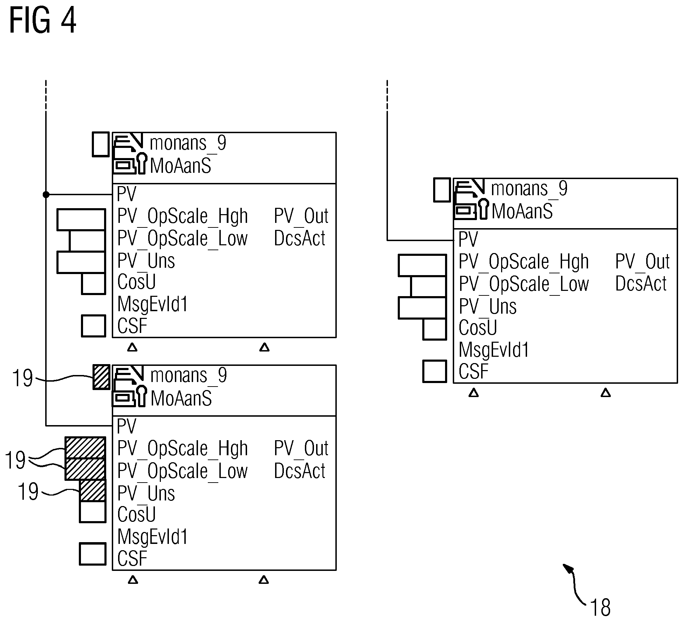

Figur 4 zeigt ein Vorschaubild 18 eines visualisierten mit "CFCVisuTank1" bezeichneten Objektes des mit "CFCTank1" bezeichneten CFC-Plans 4, wie er aufgrund der Selektion dem Anwender auf der Anzeigeeinheit dargestellt wird. Der visualisierte CFC-Plan 4 wird zwar in das Operator-System "OS1" selektiv geladen (Häkchen 15a, Spalte 13), da allerdings keine selektive Aktualisierung des Objektes "CFCTank1" vorgesehen ist, in der der neue Monitor-Baustein 5a enthalten ist, wird der Monitor-Baustein "monans_9" bei einer Visualisierung auch nicht entsprechend dynamisiert, was dem Anwender durch Markierungen 19 an diesem Baustein angezeigt wird. Dadurch ist sich der Anwender bzw. der Projekteur über die Seiteneffekte z. B. im Rahmen einer Inbetriebnahme bewusst, wobei der Projekteur die Möglichkeit hat, noch weitere Selektionen vorzunehmen um derartige Seiteneffekte zu vermeiden.

Mittels der beschriebenen Maßnahmen wird eine schrittweise Inbetriebnahme ermöglicht, wobei zu ladenden Objekte und Konfigurationen selektiert werden können, um sich noch im Engineering die zu erwartenden Seiteneffekte anzeigen zu lassen. Dadurch kann zur Laufzeit zwischen einem Seiteneffekt und einem Projektierungsfehler unterschieden werden. Darüber hinaus kann ein Anwender weiterhin selektiv Änderungen hinzunehmen, bis ungewünschte Seiteneffekte nicht mehr auftreten. Durch ein abhängigkeitsorientiertes, "seiteneffektberücksichtigendes", selektives und deltafähiges Laden kann die Inbetriebnahme neuer Automatisierungsfunktionalität effektiver und fehlerminimierter durchgeführt werden.

## Patentansprüche

1. Engineering-System zum Projektieren einer Automatisierungseinrichtung, wobei das Engineering-System dazu ausgebildet ist
- erste Objekte (4, 5) für mindestens ein Automatisierungsgerät und zweite Objekte (7a, 7b) für mindestens ein Operator-System gemäß einer technologischen Hierarchie (1) strukturiert zu hinterlegen und anzuzeigen sowie
- aus den ersten Objekten (4, 5) erste Runtime-Daten zum Laden in das Automatisierungsgerät und aus den zweiten Objekten (7a, 7b) zweite Runtime-Daten zum Laden in das Operator-System zu erzeugen, wobei Bestandteile der ersten Runtime-Daten mit Bestandteilen der zweiten Runtime-Daten in Wirkverbindung stehen,
**dadurch gekennzeichnet, dass** das Engineering-System dazu ausgebildet ist,
- aus den in der technologischen Hierarchie (1) angezeigten und von einem Anwender ausgewählten Objekten (7a, 7b) eine Tabelle oder eine Übersichtsdarstellung (8) mit den ausgewählten Objekten (7a, 7b) zu erzeugen, welche dem Anwender anzeigt, welche Bestandteile der ersten Runtime-Daten mit welchen Bestandteilen der zweiten Runtime-Daten in Wirkverbindung stehen,
- von dem Anwender in der Tabelle oder in der Übersichtdarstellung (8) selektierte Bestandteile
- der ersten Runtime-Daten in das Automatisierungsgerät und/oder
- der zweiten Runtime-Daten in das Operator-System zu laden.

2. Engineering-System nach Anspruch 1, **dadurch gekennzeichnet, dass** die Tabelle oder die Übersichtsdarstellung (8) anzeigt, ob die Selektion sich auf das mindestens eine Automatisierungsgerät und/oder sich auf das mindestens eine Operator-System auswirkt.

3. Anordnung mit einem Engineering-System nach Anspruch 1 oder 2 und einem Operator-System, **dadurch gekennzeichnet, dass** sich eine auf das Operator-System auswirkende Selektion auf dem Operator-System dargestellt wird.

## Claims

1. Engineering system for planning an automation entity, wherein the engineering system is designed
- to store and display first objects (4, 5) for at least one automation device and second objects (7a, 7b) for at least one operator system in a structured manner in accordance with a technological hierarchy (1), and
- to generate from the first objects (4, 5) first runtime data for loading into the automation device and from the second objects (7a, 7b) second runtime data for loading into the operator system, wherein components of the first runtime data are operatively connected to components of the second runtime data,
**characterised in that** the engineering system is designed
- to generate, from the objects (7a, 7b) that are displayed in the technological hierarchy (1) and selected by a user, a table or overview display (8) containing the selected objects (7a, 7b) and showing the user which components of the first runtime data are operatively connected to which components of the second runtime data, and
- of the components selected by the user in the table or the overview display (8), to load
- components of the first runtime data into the automation device and/or
- components of the second runtime data into the operator system.

2. Engineering system according to claim 1, **characterised in that** the table or overview display (8) shows whether the selection takes effect on the at least one automation device and/or on the at least one operator system.

3. Arrangement comprising an engineering system according to claim 1 or 2 and an operator system, **characterised in that** a selection which takes effect on the operator system is displayed on the operator system.

## Revendications

1. Système d'ingénierie pour planifier un dispositif d'automatisation, le système d'ingénierie étant constitué pour mettre en mémoire et indiquer, d'une manière structurée suivant une hiérarchie technologique
- pour mettre en mémoire et indiquer, d'une manière structurée suivant une hiérarchie technologique des premiers objets (4, 5) pour au moins un appareil d'automatisation et des deuxièmes objets (7a, 7b) pour au moins un système opérateur, ainsi que
- pour produire, à partir des premiers objets (4, 5), des premières données runtime pour le chargement dans l'appareil d'automatisation et, à partir des deuxièmes objets (7a, 7b), des deuxièmes données runtime pour le chargement dans le système opérateur, des constituants des premières données runtime étant en liaison active avec des constituants des deuxièmes données runtime,
**caractérisé en ce que** le système d'ingénierie est constitué
- pour, à partir des objets (7a, 7b) indiqués dans la hiérarchie (1) technologique et sélectionnés par un utilisateur, produire une table ou une représentation (8) d'ensemble ayant les objets (7a, 7b) sélectionnés, qui indique à l'utilisateur quels constituants des premières données runtime sont en liaison active avec quels constituants des deuxièmes données runtime,
- pour charger, par l'utilisateur, dans la table ou dans la représentation (8) d'ensemble, des constituants sélectionnés
- des premières données runtime dans l'appareil d'automatisation et/ou
- des deuxièmes données runtime dans le système opérateur.

2. Système (1) d'ingénierie suivant la revendication 1, **caractérisé en ce que** la table ou la représentation (8) d'ensemble indique si la sélection agit sur le au moins un appareil d'automatisation et/ou sur le au moins un système opérateur.

3. Agencement comprenant un système d'ingénierie suivant la revendication 1 ou 2 et un système opérateur, **caractérisé en ce qu'**une sélection, agissant sur le système opérateur, est représentée sur le système opérateur.
